# EUROPEAN PATENT SPECIFICATION

(11) **EP 1 219 645 B1**
(45) Date of publication and mention of the grant of the patent: **25.02.2004**
(21) Application number: 01310885.7
(22) Date of filing: 24.12.2001
(51) Int. Cl.: C08F 10/08, C08L 23/20

(54) **Polybutene resin and pipe material and pipe comprising the same**
Polybutenharz und Rohrwerkstoff und Rohr, das diesen Werkstoff enthält
Rösine de polybutène et matériau tubilaire et tube le contenante

(30) Priority: 26.12.2000 JP 2000395095; 05.12.2001 JP 2001370881
(43) Date of publication of application: 03.07.2002
(73) Proprietor: MITSUI CHEMICALS, INC., Tokyo (JP)
(72) Inventor: Tokui, Shin, c/o Mitsui Chemicals, Inc., Ichihara-shi, Chiba (JP); Komiya, Kan, c/o Mitsui Chemicals, Inc., Ichihara-shi, Chiba (JP)
(74) Representative: Cresswell, Thomas Anthony

(56) References cited:
- EP-A- 0 476 660
- WO-A-99/45043
- US-A- 4 503 203

## Description

### BACKGROUND OF THE INVENTION

### 1. FIELD OF THE INVENTION

The present invention relates to a polybutene resin, and a pipe material and a pipe comprising the same and more specifically, to a polybutene resin excellent in high-speed moldability as well as creep resistance and pressure resistance, and a pipe material and a pipe comprising the same.

### 2. Description of the Related Art

Metal pipe materials such as lead-plated steel pipes, copper pipes and lead pipes have currently been used as pipe materials for water/hot water supply. However, steel pipes may suffer a problem of red or black water generated by rust, and copper pipes may suffer a problem of pinholes or blue water generated by galvanic corrosion. Furthermore, copper pipes have some other problems. For example, it is difficult to make them lighter, and it is not easy to make a diameter of a copper pipe larger. Under these circumstances, pipe materials having no such problems have been desired. In some industrial areas, pipe materials comprising synthetic resins such as a vinyl chloride resin, polyethylene and poly-1-butene that have no problem of pinholes by rust or galvanic corrosion have already been being used.

Vinyl chloride resin is inferior in flexibility as a resin, and also has sanitary and environmental problems. Polyethylene has some problems of inferior pressure resistance and long-term durability.

Poly-1-butene resin is excellent in pressure resistance strength, rigidity, creep resistance at high temperatures (40 to 120°C), heat resistance, impact strength at low temperatures, abrasion resistance, flexibility, crystallization rate and the like, so that the resin is one of the resins that are preferably used as pipe materials for water/hot water supply. However, poly-1-butene resin generally has a narrow molecular weight distribution represented by the ratio (Mw/Mn) of a weight-average molecular weight (Mw) to a number-average molecular weight (Mn) of 3 or smaller. On this account, in the case of molding this resin into a pipe having a diameter of 30 mm or smaller, such molding is sufficiently possible at a low molding rate (3 m/minute or smaller), but molding at a higher rate causes roughness on the inside and outside surfaces of the resulting pipe, so that a pipe with a good appearance cannot be obtained. In short, the resin has a problem on high-speed moldability.

In order to improve high-speed moldability of poly-1-butene resin, the applicant of the present application previously proposed a poly-1-butene resin composition comprising a poly-1-butene resin (A) having a molecular distribution Mw/Mn of 6 or smaller and a MFR of 0.01 to 5, and a poly-1-butene resin (B) having a MFR 20 times or more as large as that of the poly-1-butene resin (A) (JP 05-009352 A). However, high-speed moldability of this polybutene resin was still a little unsatisfactory.

It is an object of the present invention to provide a polybutene resin not only having excellent characteristics that poly-1-butene resin intrinsically has, such as rigidity, creep characteristics, impact resistance strength, pressure resistance strength, heat resistance, abrasion resistance, flexibility, crystallization rate and the like, but also further excelling in moldability, particularly high-speed moldability of a pipe of small diameter and, in addition, excelling in a balance between such moldability and pressure resistance, and a pipe material and a pipe comprising the resin.

### SUMMARY OF THE INVENTION

According to the present invention, there is provided a polybutene resin:
(1) comprising 80 to 100 mol% of the 1-butene unit and 0 to 20 mol% of a C₂₋₁₀ α-olefin (except 1-butene) unit;
(2) having a melt flow rate (MFR) of 0.01 to 10 g/10 minutes;
(3) having a molecular weight distribution represented by the ratio (Mw/Mn) of a weight-average molecular weight (Mw) to a number-average molecular weight (Mn) of 6 or larger; and
(4) in a molecular weight distribution curve plotted on the basis of a chromatograph by gel permeation chromatography (GPC), the portion of weight-average molecular weights of 6 ×10⁵ or higher accounting for 20% or larger of the total area, which is defined as the area surrounded with the curve and the horizontal axis.

According to the present invention, it is preferable that a polybutene resin comprises a mixture of 5 to 95% by weight of a polybutene resin (A): having a MFR of 0.1 to 1000 g/10 minutes; having an Mw/Mn of 30 or smaller; and in a molecular weight distribution curve plotted on the basis of a chromatograph by GPC, the portion of weight-average molecular weights of 6×10⁵ or higher accounting for smaller than 20% of the total area, which is defined as the area surrounded with the curve and the horizontal axis, and 5 to 95% by weight of a polybutene resin (B): having a MFR of 0.001 to 5 g/10 minutes; having an Mw/Mn of 30 or smaller; and in a molecular weight distribution curve plotted on the basis of a chromatograph by GPC, the portion of weight-average molecular weights of 6×10⁵ or higher accounting for 20% or larger of the total area, which is defined as the area surrounded with the curve and the horizontal axis.

Also, according to the present invention, it is preferable that the isotactic index of the polybutene resin by NMR is 90 (mmmm%) or larger.

Also, according to the present invention, a polybutene resin is preferably for use in a pipe material, and particularly in a cold and hot water pipe material.

Also, according to the present invention, there is provided a polybutene resin pipe material comprising the above-mentioned polybutene resin.

According to the present invention, there is provided a polybutene resin pipe or a joint for a pipe comprising the above-mentioned polybutene resin material.

### DETAILED DESCRIPTION OF THE INVENTION

It is known that widening a molecular weight distribution Mw/Mn can improve high-speed moldability of a pipe comprising a poly-1-butene resin. However, it is difficult to balance a molecular weight distribution with pressure resistance such as hydrostatic pressure strength and so on, that is, to achieve both characteristics compatibly, so that a satisfactory poly-1-butene resin has not been obtained yet in the present situation.

The present inventors have found that a poly-1-butene resin having good high-speed moldability can be obtained and a pipe material and a pipe comprising a polybutene resin with a good balance between moldability and pressure resistance also can be obtained by widening a molecular weight distribution Mw/Mn of a poly-1-butene resin and at the same time increasing a content of high molecular weight components, compared with poly-1-butene resins that are generally available. The present invention bases its completion on the above finding.

The polybutene resin of the present invention is a homopolymer of 1-butene or a copolymer of 1-butene with another C₂₋₁₀ α-olefin (except 1-butene), and the resin comprises 80 to 100 mol%, preferably 90 to 100 mol%, of the 1-butene unit and 0 to 20 mol%, preferably 0 to 10 mol%, of an α-olefin unit. If the content of an α-olefin unit exceeds 20 mol%, characteristics of polybutene resins such as rigidity, creep characteristics, impact resistance strength, pressure resistance strength, heat resistance, abrasion resistance, flexibility, crystallization rate and the like deteriorate. A homopolymer of 1-butene, a copolymer of 1-butene with propylene and a copolymer of 1-butene with ethylene are preferable.

The polybutene resin of the present invention has a melt flow rate (MFR; ASTM D1238, 190°C, a load of 2.16 kg) of 0.01 to 10 g/10 minutes, preferably 0.01 to 5 g/10 minutes, especially preferably 0.01 to 3 g/10 minutes. If the MFR is in the above range, extrusion moldability, pressure resistance and creep characteristics of the resin are good.

The polybutene resin of the present invention has a ratio (Mw/Mn) of a weight-average molecular weight (Mw) to a number-average molecular weight (Mn) of 6 or more, preferably 6 to 30. The ratio indicates a molecular weight distribution. If the ratio is in the above range, extrusion moldability of the resin is good.

Incidentally, a molecular weight distribution Mw/Mn was measured by the following GPC analysis method:
(a) Polystyrenes that have different molecular weights are analyzed by GPC (gel permeation chromatography; made by Water Co., Model 1 150C) using a standard polystyrene of which molecular weight is known (monodisperse polystyrene, made by Tosoh Corporation) under the following conditions, and a calibration curve of molecular weights M and EV (elution volume) values is plotted.
   - Column:: Made by Tosoh Corporation, TSKGMH-6.6 mmϕ×600 mm
   - Amount of a sample:: 400 µg
   - Temperature:: 135°C
   - Flow rate:: 1 m/minute
(b) A sample of which molecular weight measured (a polybutene resin) and a solvent, o-dichlorobenzene, were placed in a flask to prepare a solution mixed in a ratio of 20 ml of the solvent to 15 mg of the sample. A stabilizer, 2,6-di-t-butylcresol, is added to this sample solution so that the concentration of the stabilizer is 0.1% by weight. After the resulting solution is heated at 140°C for 1 hour, the sample and the stabilizer are completely dissolved by stirring the solution for 1 hour.

Next, the sample solution is filtered through a filter of 0.5 µm at a temperature of 135 to 140°C. The resulting filtrate is analyzed by GPC under the same conditions as in the above (a), and
the number-average molecular weight: Mn = ΣMiNi/ΣNi and
the weight-average molecular weight: Mw = ΣMi²Ni/ΣMiNi are determined from the EV values thus obtained using the calibration curve that is previously made as mentioned above. Then a molecular weight distribution Mw/Mn is calculated.

The polybutene resin of the present invention is a homopolymer of butene or a copolymer of 1-butene with an α-olefin in which, in a molecular weight distribution curve plotted on the basis of a chromatograph by GPC, the portion of weight-average molecular weights of 6×10⁵ or higher accounts for 20% or larger of the total area, which is defined as the area surrounded with the curve and the horizontal axis, preferably the portion of weight-average molecular weights of 7×10⁵ or higher accounts for 5% or larger of the total area. If the content of high molecular weight components is high as described above, creep characteristics of the resin are good.

The polybutene resin of the present invention may be a mixture of two or more kinds of polybutene resins that have different molecular weights as long as a polybutene resin after mixing satisfies the characteristics of the present invention. For example, a mixture of 5 to 95% by weight of a polybutene resin (A) having a MFR of 0.1 to 1000 g/10 minutes and a molecular weight distribution Mw/Mn of 30 or smaller and containing molecular weight components so that the portion of weight-average molecular weights of 6×10⁵ or higher accounts for smaller than 20% of the total area, which is defined as the area surrounded with the curve and the horizontal axis in a molecular weight distribution curve plotted on the basis of a chromatograph by GPC, and 5 to 95% by weight of a polybutene resin (B) having a MFR of 0.001 to 5 g/10 minutes and a molecular weight distribution Mw/Mn of 30 or smaller and containing ultrahigh molecular weight components so that the portion of weight-average molecular weights of 6×10⁵ or higher accounts for 20% or larger of the total area, which is defined as the area surrounded with the curve and the horizontal axis in a molecular weight distribution curve plotted on the basis of a chromatograph by GPC. Furthermore, the resin of the present invention may be a mixture of two or more kinds of polybutene resins that have the characteristics of the present invention and are obtained by polymerization blending by multistage polymerization.

The polybutene resin of the present invention has an isotactic index (II) of 90 (mmmm%) or more, preferably 93 (mmmm%) or more, more preferably 95 (mmmm%) or more. If the index is in the above range, a pipe obtained by molding the resin excels in rigidity, heat resistance and creep resistance.

The isotactic index (II) was measured by the following method.

In a sample tube of a nuclear magnetic resonance apparatus (NMR; GSX-400 Type made by JEOL Ltd.), 50 mg of a sample (polybutene resin) was placed, and 0.5 ml of a solvent, hexachlorobutadiene, was added thereto. Then ultrasonication was conducted for 30 minutes, and the mixture was placed in a heating furnace at 110°C to dissolve the sample. When almost all the amount of the sample was dissolved, 0.2 ml of deuterated benzene was added, and the sample was further dissolved homogeneously by heating. When the sample was dissolved homogeneously, the sample tube was sealed by melting to obtain a sample to be measured. The sample was analyzed using a NMR apparatus under the following conditions.
- Measured nucleus:: ¹³C
- Observed frequency:: 100.4 MHz
- Pulse interval:: 4.5 seconds
- Pulse width:: 45°
- Measuring temperature:: 115°C

The isotactic index (II) was calculated by the following method.

The II (pentad) of a homopolymer of 1-butene was represented by the area of 27.36 to 28.2 ppm (S2) and the area of the S2 area plus the area at a lower field side of the mmmm peak (S3) to the total area of 26.1 to 28.2 ppm of methylene carbon (S1). That is, the II of a homopolymer of 1-butene is calculated by the formula, II (mmmm%) = (S2+S3)/S1×100%. In the case of a 1-butene/propylene copolymer, the II is calculated by the formula, II (mmmm%) =S2/S1×100%.

The polybutene resin of the present invention is produced by the use of Ziegler catalysts, metallocene catalysts and the like. For example, the resin is produced using an α-olefin polymerization catalyst formed from the following components:
[1] a solid catalyst component of the group IVB metals that contains a metal of the group IVB in the periodic table and magnesium and may further contain a halogen;
[2] an organometallic compound catalyst component containing a metal of the group I to the group III in the periodic table; and in addition, if necessary,
[3] an organosilicon compound catalyst component containing a cyclopentyl group, a cyclopentenyl group, a cyclopentadienyl group or a derivative of these groups.

For example, in the case of the group IVB metal being titanium, the solid catalyst components of the group IVB metals [1] can be produced by contacting a magnesium compound (or magnesium metal) and a titanium compound, and preferably further an electron donor. In order to produce the solid catalyst components of the group IVB metals [1], publicly known methods of preparing a highly active titanium catalyst component from a magnesium compound, a titanium compound and an electron donor may be adopted. Moreover, the above ingredients may be contacted in the presence of other reagents such as silicon, phosphorus, aluminum and the like.

Several examples of the methods for the production of these solid catalyst components of the group IVB metals are simply described below.
(1) A method of reacting a titanium compound with a magnesium compound or a complex compound comprising a product obtained by reaction of magnesium compound and an electron donor in a liquid phase.
   This reaction may be carried out in the presence of a grinding aid and the like. Moreover, solid compounds may be ground when they are reacted as described above.
(2) A method of reacting a liquid magnesium compound having no reducing power with a liquid titanium compound in the presence of an electron donor to deposit a solid titanium complex.
   This method is described in, for example, JP 58-083006 A.
(3) A method of further reacting a titanium compound with the reaction product obtained in (2).
(4) A method of further reacting an electron donor and a titanium compound with the reaction product obtained in the above (1) or (2).
(5) A method of grinding a magnesium compound or a complex compound comprising a magnesium compound and an electron donor in the presence of a titanium compound to obtain a solid substance, and treating the solid substance with any one of a halogen, a halogen compound and an aromatic hydrocarbon.
   Moreover, in this method, a magnesium compound or a complex compound comprising a magnesium compound and an electron donor may be ground in the presence of a grinding aid and the like. Furthermore, after a magnesium compound or a complex compound comprising a magnesium compound and an electron donor is ground in the presence of a titanium compound, the magnesium compound or the complex compound is preliminary treated with a reaction aid, and subsequently may be treated with a halogen and the like. Suitable reaction aids include organoaluminum compounds, halogen-containing silicon compounds and the like.
(6) A method of treating a compound obtained in the above (1) to (4) with a halogen or a halogen compound or an aromatic hydrocarbon.
(7) A method of contacting a contact catalytic reaction product of a metallic compound, dihydrocarbylmagnesium and a halogen-containing alcohol with an electron donor and a titanium compound.
(8) A method of reacting a magnesium compound such as a magnesium salt of an organic acid, alkoxymagnesium, aryloxymagnesium and the like with an electron donor, a titanium compound and/or a halogen-containing hydrocarbon.
(9) A method of supporting a titanium compound on a solid carrier obtained by solidifying complex particles from a suspension containing complex particles of halogenated magnesium and an active hydrogen compound in a molten state in an organic liquid medium containing 0.1 to 40 parts by weight of siloxane and/or an organic liquid medium containing a surfactant.

This carrier is described in, for example, JP 60-037804 B and JP 60-037805 B.

Titanium compounds used as a raw material of the above solid catalyst component of the group IVB metals [1] include, for example, Ti(OR^{a})_{g}X_{4-g} (R^{a} is a hydrocarbon group having 1 to 10 carbon atoms, X is a halogen atom, and g is a number of 0≤g≤4.)

Furthermore, magnesium compounds used as a raw material of the catalyst component [1] include, for example, magnesium compounds having a magnesium-carbon bond or a magnesium-hydrogen bond, or Mg(OR^{b})ₕX₂₋ₕ (R^{b} is an alkyl group having 1 to 10 carbon atoms, X is a halogen, and h is a number of 0≤h≤4.)

Moreover, electron donors used as a raw material of the catalyst component [1] include oxygen-containing electron donors such as alcohols, phenols, ketones, aldehydes, carboxylic acids, esters of organic acids or inorganic acids, ethers, acid amides and acid anhydrides, nitrogen-containing electron donors such as ammonia, amines, nitriles and isocyanates, and so on.

A preferable oxygen-containing electron donor is an ether, and a particularly preferable one is a compound having two or more ether linkages like the following diether.

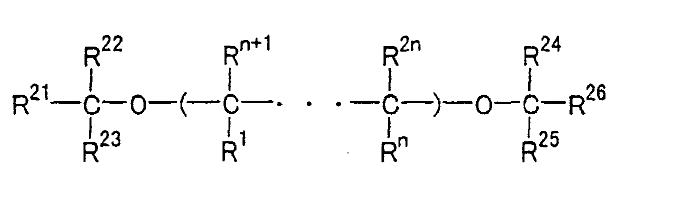

(R¹ to R²⁶ each are a substituent having at least one kind of element selected from carbon, hydrogen, oxygen, halogen, nitrogen, sulfur, phosphorus, boron and silicon, and any of R¹ to R²⁶ may form a ring except benzene ring cooperatively, and an atom except carbon may be contained in the backbone. n is an integer of 2≤n≤10.)

Suitable compounds having the above ether linkage include 2-(2-ethylhexyl)-1,3-dimethoxypropane, 2-isopropyl-1,3-dimethoxypropane, 2-cyclohexyl-1,3-dimethoxypropane, 2-(2-cyclohexylethyl)-1,3-dimethoxypropane, 2-methyl-2-cyclohexyl-1,3-dimethoxypropane, 2-isobutyl-2-isopropyl-1,3-dimethoxypropane and the like, and preferable ones include diethers such as 2-isopropyl-2-isopentyl-1,3-dimethoxypropane, 2,2-diisobutyl-1,3-dimethoxypropane, 2,2-dicyclohexyl-1,3-dimethoxypropane, 2,2-bis(cyclohexylmethyl)-1,3-dimethoxypropane, 2-isobutyl-2-isopropyl-1,3-dimethoxypropane and the like.

The organometallic compound catalyst component containing a metal of the group I to the group III in the periodic table [2] is typically an organoaluminum compound catalyst component, and is a compound having at least one aluminum-carbon bond in a molecule.

An example is an organoaluminum compound represented by the formula:
(i) the general formula

   R^{c} ⱼAl(OR^{d})ₖHₘXₚ

   (R^{c} and R^{d} each are a hydrocarbon group having 1 to 15 carbon atoms, and these may be the same or different each other. X represents a halogen atom, j is a number of 0<j≤3, k is a number of 0≤k<3, m is a number of 0≤m<3, p is a number of 0≤p<3, and j+k+m+p = 3.), and R^{c} and R^{d} each are preferably a hydrocarbon group having 1 to 4 carbon atoms.

Another example is a complex alkylated compound of a metal of the group I and aluminum represented by the following formula:
(ii) the general formula

   M¹AlR^{c} ₄

   (M¹ is Li, Na or K, R^{c} is the same as described above.)

Organoaluminum compounds belonging to (i) are exemplified:
the general formula

R^{c} ⱼAl(OR^{d})ₖ

(R^{c} and R^{d} each are the same as described above, j is a number of 1.5≤j≤3, k is a number of 0≤k≤1.5, and j+k = 3.);
the general formula

R^{c} ⱼAlXₚ

(R^{c} is the same as described above, X represents a halogen, j is a number of 0<j<3, p is a number of 0<p<3, and j+p = 3.);
the general formula

R^{c} ⱼAlHₘ

(R^{c} is the same as described above, H represents hydrogen, j is a number of 2≤j<3, m is a number of 0<m≤1, and j+m = 3.); and
the general formula

R^{c} ⱼAl(OR^{d})ₖXₚ

(R^{c} and R^{d} each are the same as described above, X represents a halogen, j is a number of 0<j≤3, k is a number of 0≤k<3, p is a number of 0≤p<3, and j+k+p =3.)

An alkylaluminum to which two or more kinds of aluminum compounds are linked may be used.

The organosilicon compound catalyst component [3] that may be optionally added to a solid catalyst component [1] and an organometallic compound catalyst component [2] is an organosilicon compound containing a cyclopentyl group, a cyclopentenyl group, a cyclopentadienyl group or a derivative of these groups in the structure, and typical examples include compounds represented by the following general formula:

R^{e}R^{f} _{q}Si (OR^{g})_{3-q}

(R^{e} is a cyclopentyl group, a cyclopentenyl group, a cyclopentadienyl group or a derivative of these groups, R^{f} and R^{g} each are a hydrocarbon group, preferably a hydrocarbon group having 1 to 10 carbon atoms. These hydrocarbon groups may be crosslinked with an alkyl group and the like. q is a number of 0<q≤3.)

R^{f} and R^{g} each are an alkyl group, a cycloalkyl group, an aryl group, an aralkyl group or the like, and typical examples include methyl, ethyl, isopropyl, phenyl, cyclopentyl, cyclopentenyl, cyclopentadienyl and the like. R^{f} and R^{g} may be the same or different. It is preferable to use organosilicon compounds in which R^{e} is a cyclopentyl group, R^{f} is an alkyl group or a cyclopentyl group, and R^{g} is an alkyl group, particularly methyl group or ethyl group.

Furthermore, it is possible to use organosilicon compounds represented by the following general formula:

R^{f} ᵣSi (OR^{g})₄₋ᵣ

(R^{f} and R^{g} are the same as described above. r is a number of 0<r<4.)

R^{f} and R^{g} are not particularly limited, and typical examples include methyl, ethyl, isopropyl, phenyl, cyclopentyl, cyclopentenyl, cyclopentadienyl and the like. R^{f} and R^{g} may be the same or different.

Specific examples of the organosilicon compounds include ethyltriethoxysilane, n-propyltriethoxysilane, phenyltriethoxysilane, dicyclohexyldimethoxysilane, dicyclopentyldimethoxysilane, cyclopentyldimethylmethoxysilane and the like, and cyclohexylmethyldimethoxysilane and so on are preferable.

Polymerization of 1-butene or copolymerization of 1-butene and an α-olefin is carried out in the presence of an α-olefin polymerization catalyst formed from a solid catalyst component [1], an organometallic compound catalyst component [2] and an organosilicon compound catalyst component [3], and polymerization may be any one of liquid-phase polymerization methods such as solution polymerization, suspension polymerization and the like, and vapor-phase polymerization methods. The solvent for use in solution polymerization is preferably an inactive hydrocarbon solvent. Liquid α-olefins may be used depending on polymerization conditions. The molar ratio of an α-olefin to 1-butene in a gas phase in a reactor is 0.001 to 0.1, preferably 0.002 to 0.08.

Polymerization temperature may be a temperature so that the polymer formed is not substantially dissolved in an inactive hydrocarbon medium, and is usually in the range of about -20 to +100°C, preferably about -20 to +80°C, more preferably 0 to +40°C. Polymerization pressure is usually in the range of atmospheric pressure to 1×10 MPa, preferably 2×10⁻¹ to 5 MPa.

Polymerization of the present invention may be carried out by a batchwise system, a semicontinuous system or a continuous system, and multistage polymerization also may be conducted by changing polymerization conditions.

Another solid catalyst component of the group IVB metals [1] is, for example, a titanium catalyst component obtained by dissolving phthalic anhydride in a homogeneous solution of magnesium chloride, a hydrocarbon solvent such as decane, and 2-ethylhexyl alcohol to obtain a homogeneous solution, adding this solution dropwise to titanium tetrachloride, thereafter adding diisobutyl phthalate to the liquid to react, adding a solid substance obtained by heated filtration to titanium tetrachloride to suspend, and washing a solid obtained by filtering again.

The organometallic compound catalyst component [2] is, for example, triisobutylaluminum, and the organosilicon compound catalyst component [3] is, for example, cyclohexylmethyldimethoxysilane.

It has already been mentioned that the polybutene resin of the present invention may be, for example, a mixture of 5 to 95% by weight of a polybutene resin (A) having a MFR of 0.1 to 1000 g/10 minutes and a molecular weight distribution Mw/Mn of 30 or smaller and containing molecular weight components so that the portion of weight-average molecular weights of 6×10⁵ or higher accounts for smaller than 20% of the total area, which is defined as the area surrounded with the curve and the horizontal axis in a molecular weight distribution curve, and 5 to 95% by weight of a polybutene resin (B) having a MFR of 0.001 to 5 g/10 minutes and a molecular weight distribution Mw/Mn of 30 or smaller and containing ultrahigh molecular weight components so that the portion of weight-average molecular weights of 6×10⁵ or higher accounts for 20% or larger of the total area, which is defined as the area surrounded with the curve and the horizontal axis in a molecular weight distribution curve.

A preferable polybutene resin (B) has a MFR of 0.001 to 5 g/10 minutes, preferably 0.001 to 3 g/10 minutes and a molecular weight distribution Mw/Mn of 30 or smaller, and the portion of weight-average molecular weights of 6×10⁵ or higher accounts for 20% or larger, preferably 20 to 70% of the total area, which is defined as the area surrounded with the curve and the horizontal axis in the above molecular weight distribution curve. The polybutene resin (B) may be a copolymer of 1-butene and an α-olefin having 2 to 10 carbon atoms.

The composition ratio by weight of the polybutene resin (A) to the polybutene resin (B) is preferably 5/95 to 95/5, more preferably 10/90 to 90/10.

If the polybutene resin of the present invention contains a nucleating agent, the solidifying rate of a molten resin extruded from a die in molding of a pipe increases, so that more stable high-speed moldability can be achieved and even after solidification, crystal transition rate peculiar to polybutene resins is increased, and besides, is effective on improvement of rigidity. Therefore, the resin containing a nucleating agent is preferable as a pipe material.

Suitable nucleating agents include, for example, polyethylene resin, polyethylene wax, ethylenebisstearoamide, polypropylene resin and the like. The content of a nucleating agent is usually about 0.01 to 2% by weight, preferably about 0.05 to 0.5% by weight.

A pipe material comprising the polybutene resin of the present invention is produced by a method of mixing a polybutene resin (a mixture of a polybutene resin (A) and a polybutene resin (B) depending on conditions), and if necessary, a nucleating agent and various additives described below using a Henschel mixer, a V-blender, a ribbon blender, a tumbler blender and the like; and a method of further melt-kneading a mixture using a uniaxial extruder, a multiaxial extruder, a Banbury mixer, a kneader and the like after mixing, and thereafter granulating or pulverizing. Furthermore, the pipe material also can be produced by polymerizing a polybutene resin (A) and a polybutene resin (B), respectively, and mixing the respective resulting polymerization solutions directly by stirring.

The polybutene resin of the present invention may be compounded with an antioxidant in order to improve long-term durability such as heat aging resistance, chlorine water resistance and the like of molded products such as a pipe obtained by molding and so on. The content of an antioxidant is usually about 0.1 to 2 parts by weight per 100 parts by weight of the resin, preferably about 0.5 to 1.8 parts by weight.

Suitable antioxidants include, for example, phenolic or phosphorus antioxidants such as 2,6-di-t-butyl-4-hydroxybenzoate, n-hexadecyl-3,5-di-t-butyl-4-hydroxybenzoate, 1,3,5-trimethyl-2,4,6-tris(3,5-di-t-butyl-4-hydroxybenzyl)benzene, 1,3,5-tris(4-t-butyl-3-hydroxy-2,6-dimethylphenyl) isocyanurate, tris(3,5-di-t-butyl-4-hydroxyphenyl) isocyanurate, n-octadecyl-3(3,5-di-t-butyl-4-hydroxyphenyl) propionate, a nickel salt of bis(3,5-di-t-butyl-4-hydroxybenzoylphosphonic acid) monoethyl ester, 2,2'-dihydroxy-3,3'-di(d-methylcyclohexyl)-5,5'-dimethyl-diphenylmethane, 4,4-thio-bis(3-methyl-6-t-butylphenol), 1,1,3-tris(2-methyl-4-hydroxy-5-t-butyl-phenyl)butane, tetrakis[methylene-3(3,5-di-t-butyl-4-hydroxyphenyl)propionate]methane, 2,6-di-t-butyl-p-cresol, 9,9'-methylene-bis(2,6-di-t-butyl-phenol), tris(2,4-di-t-butyl-phenyl) phosphite, vitamin E, and the like. These may be used individually or in combination with two or more kinds thereof.

In addition to the above antioxidants, if necessary, the polybutene resin of the present invention may contain other additives such as ultraviolet absorbents, fungicides, rust preventives, lubricants, fillers, pigments, heat-resistant stabilizers and the like.

Furthermore, The polybutene resin of the present invention may contain an olefinic elastomer such as ethylene-propylene copolymer and the like in a content of 15% by weight or smaller for the purpose of improvement of impact resistance.

A pipe material comprising a polybutene resin of the present invention is molded into various molded products by a conventional method by the use of a uniaxial extruder or a multiaxial extruder. The pipe material is preferably molded into a pipe by extrusion molding, and into a joint for pipes by injection molding. A pipe can be molded without any limitation by a form of a cross section of a pipe, a diameter of a pipe and so on.

### EXAMPLES

The present invention is specifically illustrated by reference to the following examples of the present invention and comparative examples.

### [Referential Example 1]

### [Production of polybutene resin (1)]

A 2-L autoclave was cooled down to a temperature of - 50°C or lower, 1 L of liquid 1-butene, 2 mmol of diethylaluminum chloride and 0.3 L of hydrogen were added, and the temperature was elevated to 50°C. Thereafter 1 mmol of titanium trichloride was added. 1-butene was supplied to this, and polymerization was carried out at 50°C for 1 hour. Then the polymerization was terminated by adding methanol, and the unreacted 1-butene was removed.

Physical properties (MFR, II, propylene content, Mw, Mn, Mw/Mn, area ratio of Mw of 60% or higher) of the polybutene resin (1) thus obtained are shown in Table 1.

MFR was measured at a temperature of 190°C with a load of 2.16 kg according to the regulation of ASTM D 1238.

Measurement methods of the other resin physical properties are described above.

### [Referential Example 2]

### [Preparation of solid titanium catalyst component (1)]

6.0 kg (63 mol) of anhydrous magnesium chloride, 26.6 L of decane and 29.2 L (189 mol) of 2-ethylhexyl alcohol were heated and allowed to react at 140°C for 4 hours to make a homogeneous solution. To this solution, 1.59 kg (7.88 mol) of 2-isopropyl-2-isobutyl-1,3-dimethoxypropane was added, and the mixture was further stirred and mixed at 110°C for 1 more hour to make a homogeneous solution.

After the homogeneous solution thus obtained was cooled down to room temperature, 37.0 kg of this solution was added dropwise to 120 L (1080 mol) of titanium tetrachloride maintained at -24°C over 2.5 hours. The temperature of the solution thus obtained was elevated over 6 hours, and when the temperature reached 110°C, 0.68 kg (3.37 mol) of 2-isopropyl-2-isobutyl-1,3-dimethoxypropane was added.

The solution was further stirred at 110°C for 2 hours to be'allowed to react. Then a solid was collected from the product mixture by heated filtration, and added to 132 L of titanium tetrachloride. The slurry thus obtained was heated and allowed to react at 110°C for 2 hours. Subsequently a solid was collected again from the product mixture by heated filtration, and washed with decane and hexane at 90°C. Washing was stopped when titanium was not detected in washing liquid, and the solid titanium catalyst component (1) was obtained.

A portion of the hexane slurry of the solid titanium catalyst component (1) was collected and dried, and the dried substance was analyzed. The composition by weight comprised 3.0% titanium, 57% chlorine, 17% magnesium and 18% 2-isopropyl-2-isobutyl-1,3-dimethoxypropane.

### [Production of polybutene resin (2)]

While 73 L/h of hexane, 10 NL/h of hydrogen, 0.38 mmol/h, which was converted to a titanium atom basis, of the solid titanium catalyst component (1), 19 mmol/h of triethylaluminum (2) and 0.95 mmol/h of cyclohexyldimethoxysilane (3) were being supplied to a continuous polymerization vessel having an internal volume of 200 L, copolymerization of 1-butene and propylene was carried out at a temperature of 60°C, at a total pressure of 3.5 kg/cm² and for a residence time of 1 hour, thereby obtaining 4.8 kg/h of a 1-butene/propylene copolymer, that is, the polybutene resin (2).

Physical properties of the polybutene resin (2) are shown in Table 1.

### [Referential Example 3]

### [Preparation of Solid titanium catalyst component (2)]

A mixture of 4.28 kg (45 mol) of anhydrous magnesium chloride, 26.6 L of decane and 21.1 L (135 mol) of 2-ethylhexyl alcohol was heated and allowed to react at 140°C for 5 hours to make a homogeneous solution. To this solution 1 kg (6.78 mol) of phthalic anhydride was added, and the mixture was further stirred and mixed at 130°C for 1 more hour to make a homogeneous solution.

After the homogeneous solution thus obtained was cooled down to room temperature, 120 L (1080 mol) of titanium tetrachloride maintained at -20°C was added dropwise to this solution over 2 hours. The temperature of the solution thus obtained was elevated over 4 hours, and when the temperature reached 110°C, 3.02 L (11.3 mol) of diisobutyl phthalate was added.

The solution was further stirred at 110°C for 2 hours to be allowed to react. Then a solid was collected from the reaction mixture by heated filtration, and the solid was added to 165 L of titanium tetrachloride. The slurry thus obtained was heated and allowed to react at 110°C for 2 hours. Subsequently a solid was collected again from the reaction mixture by heated filtration, and washed with decane and hexane at 110°C. Washing was stopped when titanium was not detected in washing liquid, and the solid titanium catalyst component (2) was obtained.

A portion of the hexane slurry of the solid titanium catalyst component (2) was collected and dried, and the dried substance was analyzed. The composition by weight comprised 2.5% titanium, 58% chlorine, 18% magnesium and 13.8% diisobutyl phthalate.

### [Production of polybutene resin (3)]

While 73 L/h of hexane, 10 NL/h of hydrogen, 0.38 mmol/h, which was converted to a titanium atom basis, of the solid titanium catalyst component (2), 19 mmol/h of triisobutylaluminum (2') and 0.95 mmol/h of dicyclopentyldimethoxysilane (3') were being supplied to a continuous polymerization vessel having an internal volume of 200 L, polymerization of 1-butene was carried out at a temperature of 60°C, at a total pressure of 3.5 kg/cm² and for a residence time of 1 hour, thereby obtaining 4.8 kg/h of a 1-butene polymer, that is, the polybutene resin (3).

Physical properties of the polybutene resin (3) are shown in Table 1.

### [Referential Example 4]

### [Production of polybutene resin (4)]

While 73 L/h of hexane, 0.38 mmol/h, which was converted to a titanium atom basis, of the solid titanium catalyst component (3), 19 mmol/h of triisobutylaluminum (2') and 0.95 mmol/h of dicyclopentyldimethoxysilane (3') were being supplied to a continuous polymerization vessel having an internal volume of 200 L and hydrogen was also being supplied with the supplied amount of hydrogen controlled so that the molar ratio of hydrogen to 1-butene in the gas phase in the polymerization vessel should be 0.5, polymerization of 1-butene was carried out at a temperature of 60°C, at a total pressure of 3.5 kg/cm² and for a residence time of 1 hour, thereby obtaining 4.8 kg/h of a 1-butene polymer, that is, the polybutene resin (4).

Physical properties of the polybutene resin (4) are shown in Table 1.

### [Referential Example 5]

### [Production of polybutene resin (5)]

While 73 L/h of hexane, 10 NL/h of hydrogen, 0.38 mmol/h, which is converted to a titanium atom basis, of the solid titanium catalyst component (2), 19 mmol/h of triisobutylaluminum (2') and 0.95 mmol/h of dicyclopentyldimethoxysilane (3') were being supplied to a continuous polymerization vessel having an internal volume of 200 L, polymerization of 1-butene was carried out at a temperature of 60°C, at a total pressure of 3.5 kg/cm² and for a residence time of 1 hour, thereby obtaining 4.8 kg/h of a 1-butene polymer, that is, the polybutene resin (5).

Physical properties of the polybutene resin (5) are shown in Table 1.

### [Examples 1 to 5, Comparative Examples 1 and 2]

The polybutene resins of which physical properties are shown in Table 2 were prepared by mixing the polybutene resins (1) to (5) and high-density polyethylene as a nucleating agent in the proportions shown in Table 2 using a uniaxial extruder.

Next, by using an extruder (produced by Ikegai Tekko K.K.; SX-90) equipped with a die (inside diameter of the die: 18.8 mm, outside diameter of the pin: 12.8 mm, die land length: 50 mm), the resulting resins were melt-extruded from the die in an extruded amount of 110 kg/h with temperature conditions (°C) set as follows, thereby molding pipes.
C1/C2/C3/C4/C5/adaptor/gear pump/D1/D2/D3 =
170/180/190/190/190/190/190/190/190/190

It was determined whether the appearance of an extruded parison was good or bad by observing visually the situation where ring-like appearance defects occurred in the circumference of the parison.

The hydrostatic pressure strength of a pipe was measured at 95°C under a hoop stress of 6.9 MPa according to ISO 1167.

The polybutene resins of the present invention cause no ring-like appearance defects in the circumference of a parison, and also have great hydrostatic pressure strength, which is in a good balance with moldability.

The polybutene resins of the present invention not only have excellent moldability, particularly high-speed moldability as well as intrinsic characteristics such as excellent rigidity, creep characteristics, impact resistance strength and the like, but also have a good balance between moldability and pressure resistance strength, so that the resins are extremely useful for a pipe material that requires high-speed moldability and a pipe obtained therefrom. In particular, the resins are useful for a pipe for cold and hot water.

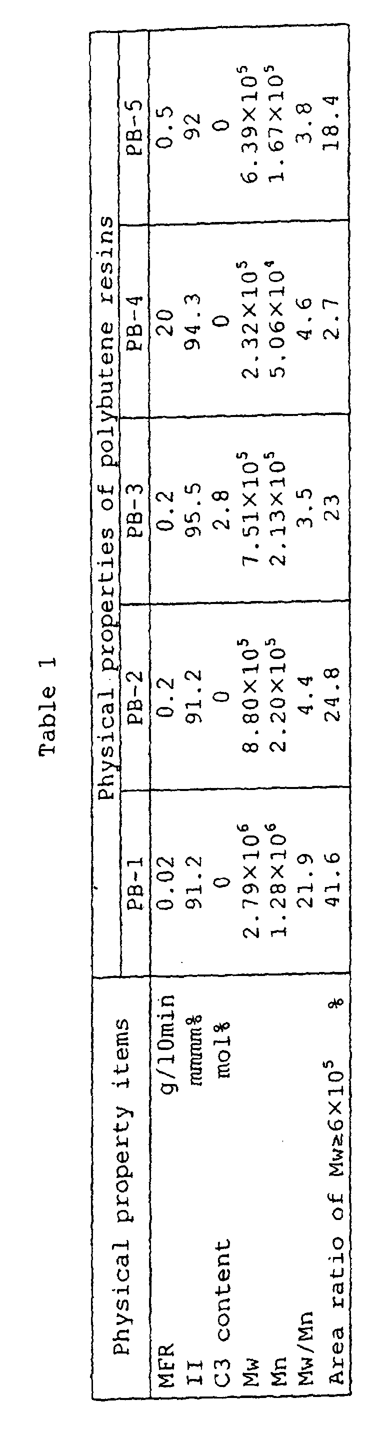

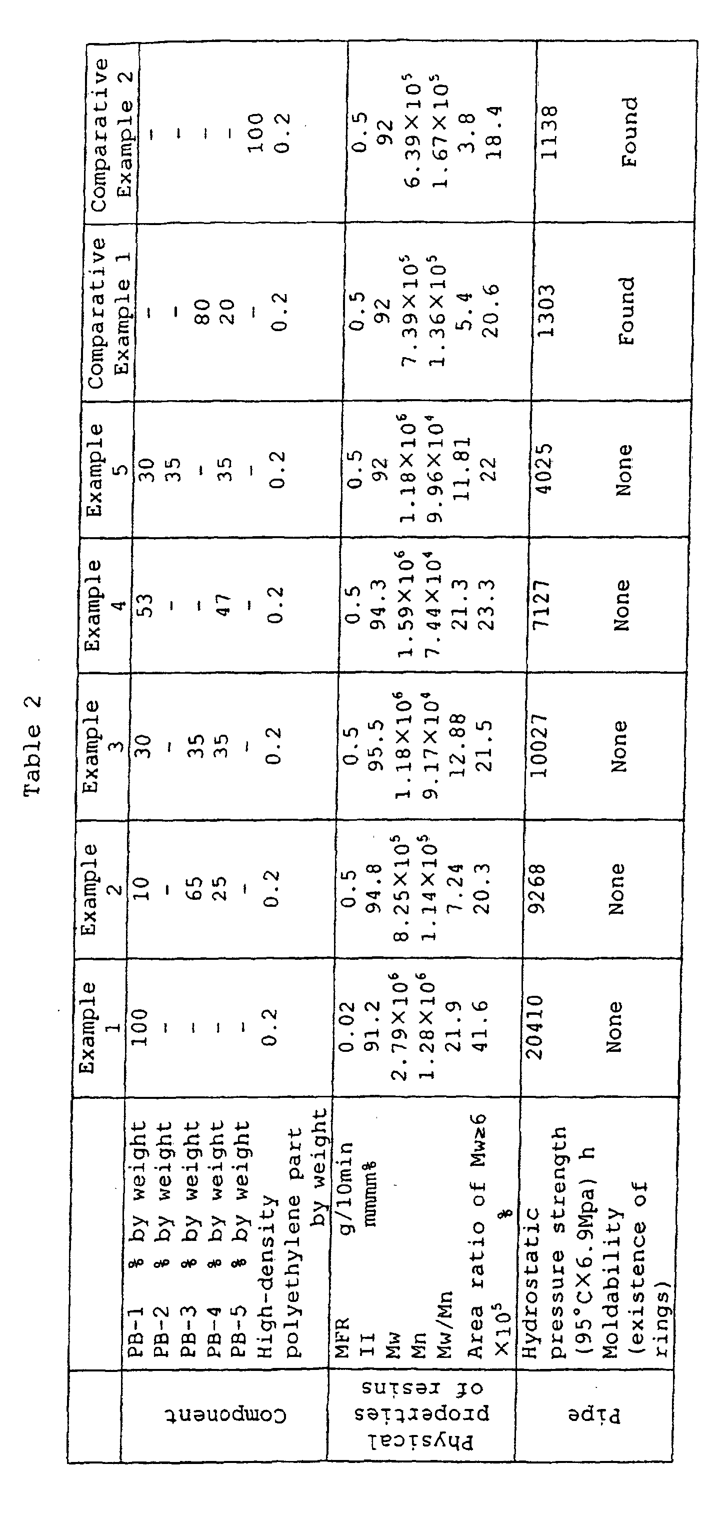

## Claims

1. A polybutene resin:
(1) comprising 80 to 100 mol% of the 1-butene unit and 0 to 20 mol% of a C₂₋₁₀ α-olefin (except 1-butene) unit;
(2) having a melt flow rate (MFR) of 0.01 to 10 g/10 minutes;
(3) having a molecular weight distribution represented by the ratio (Mw/Mn) of a weight-average molecular weight (Mw) to a number-average molecular weight (Mn) of 6 or larger; and
(4) in a molecular weight distribution curve plotted on the basis of a chromatograph by gel permeation chromatography (GPC), the portion of weight-average molecular weights of 6 ×10⁵ or higher accounting for 20% or larger of the total area, which is defined as the area surrounded with the curve and the horizontal axis.

2. A polybutene resin according to claim 1,
comprising a mixture of 5 to 95% by weight of a polybutene resin (A):
(1) comprising 80 to 100 mol% of the 1-butene unit and 0 to 20 mol% of a C₂₋₁₀ α-olefin (except 1-butene) unit;
(2) having a MFR of 0.1 to 1000 g/10 minutes;
(3) having an Mw/Mn of 30 or smaller; and
(4) in a molecular weight distribution curve plotted on the basis of a chromatograph by gel permeation chromatography (GPC), the portion of weight-average molecular weights of 6 ×10⁵ or higher accounting for smaller than 20% of the total area, which is defined as the area surrounded with the curve and the horizontal axis, and 5 to 95% by weight of a polybutene resin (B):
(1) comprising 80 to 100 mol% of the 1-butene unit and 0 to 20 mol% of a C₂₋₁₀ α-olefin (except 1-butene) unit;
(2) having a MFR of 0.001 to 5 g/10 minutes;
(3) having an Mw/Mn of 30 or smaller; and
(4) in a molecular weight distribution curve plotted on the basis of a chromatograph by gel permeation chromatography (GPC), the portion of weight-average molecular weights of 6 ×10⁵ or higher accounting for 20% or larger of the total area, which is defined as the area surrounded with the curve and the horizontal axis.

3. A polybutene resin according to claim 1 or 2, wherein the isotactic index of the polybutene resin by NMR is 90 (mmmm%) or larger.

4. Use of a polybutene resin according to any one of claims 1 to 3 in a pipe material.

5. Use of a polybutene resin according to any one of claims 1 to 3 in a cold and hot water pipe material.

6. A polybutene resin pipe material comprising a polybutene resin according to any one of claims 1 to 3.

7. A polybutene resin pipe comprising a pipe material according to claim 6.

8. A joint for a polybutene resin pipe, comprising a polybutene resin according to any one of claims 1 to 3.

9. A process for producing a polybutene resin pipe material according to any one of claims 1 to 3, which process comprises copolymerising 1-butene and a C₂₋₁₀ α-olefin other than 1-butene in the presence of
(a) a solid catalyst component comprising a group IVB metal and magnesium and optionally a halogen,
(b) an organometallic compound catalyst, and optionally
(c) an organosilicon compound catalyst.

## Patentansprüche

1. Ein Polybutenharz
(1) umfassend 80 bis 100 Mol% der 1-Buteneinheit und 0 bis 20 Mol% einer C₂₋₁₀-α-Olefineinheit (außer 1-Buten);
(2) mit einem Schmelzindex (MFR) von 0,01 bis 10 g/10 Minuten;
(3) mit einer Molekulargewichtsverteilung, angegeben durch das Verhältnis (Mw/Mn) von einem Gewichtsmittel-Molekulargewicht (Mw) zu einem ZahlenmittelMolekulargewicht (Mn), von 6 oder größer; und
(4) wobei in einer Molekulargewichtsverteilungskurve, aufgetragen auf der Grundlage eines Chromatographs mittels Gelpermeationschromatographie (GPC), der Teil der Gewichtsmittel-Molekulargewichte von 6 x 10⁵ oder höher 20% oder mehr der Gesamtfläche, die als Fläche definiert wird, die von der Kurve und der Horizontalachse umgeben ist, ausmacht.

2. Ein Polybutenharz gemäß Anspruch 1,
umfassend eine Mischung von 5 bis 95 Gew.-% eines Polybutenharzes (A):
(1) umfassend 80 bis 100 Mol% der 1-Buteneinheit und 0 bis 20 Mol% einer C₂₋₁₀-α-Olefineinheit (außer 1-Buten);
(2) mit einen MFR von 0,1 bis 1000 g/10 Minuten;
(3) mit einen Mw/Mn von 30 oder weniger; und
(4) wobei in einer Molekulargewichtsverteilungskurve, aufgetragen auf der Grundlage eines Chromatographs mittels Gelpermeationschromatographie (GPC), der Teil der Gewichtsmittel-Molekulargewichte von 6 x 10⁵ oder höher 20% oder mehr der Gesamtfläche, die als Fläche definiert wird, die von der Kurve und der Horizontalachse umgeben ist, ausmacht,
und 5 bis 95 Gew.-% eines Polybutenharzes (B):
(1) umfassend 80 bis 100 Mol% der 1-Buteneinheit und 0 bis 20 Mol% einer C₂₋₁₀-α-Olefineinheit (außer 1-Buten);
(2) mit einen MFR von 0,001 bis 5 g/10 Minuten;
(3) mit einen Mw/Mn von 30 oder weniger; und
(4) wobei in einer Molekulargewichtsverteilungskurve, aufgetragen auf der Grundlage eines Chromatographs mittels Gelpermeationschromatographie (GPC), der Teil der Gewichtsmittel-Molekulargewichte von 6 x 10⁵ oder höher 20% oder mehr der Gesamtfläche, die als Fläche definiert wird, die von der Kurve und der Horizontalachse umgeben ist, ausmacht.

3. Ein Polybutenharz gemäß einem der Ansprüche 1 oder 2, wobei der isotaktische Index des Polybutenharzes mittels NMR 90 (mmmm%) oder mehr beträgt.

4. Verwendung eines Polybutenharzes gemäß einem der Ansprüche 1 bis 3 in einem Rohrmaterial.

5. Verwendung eines Polybutenharzes gemäß einem der Ansprüche 1 bis 3 in einem Rohrmaterial für Warm- und Kaltwasser.

6. Ein Polybutenharzrohrmaterial umfassend ein Polybutenharz gemäß einem der Ansprüche 1 bis 3.

7. Ein Polybutenharzrohr umfassend ein Rohrmaterial gemäß Anspruch 6.

8. Ein Verbindungsstück für ein Polybutenharzrohr, umfassend ein Polybutenharz gemäß einem der Ansprüche 1 bis 3.

9. Ein Verfahren zur Herstellung eines Polybutenharzrohrmaterials gemäß einem der Ansprüche 1 bis 3, wobei das Verfahren das Copolymerisieren von 1-Buten und einem C₂₋₁₀-α-Olefin, das von 1-Buten verschieden ist, in Gegenwart von
(a) einer festen Katalysatorkomponente umfassend ein Metall der Gruppe IVB und Magnesium und gegebenenfalls ein Halogen,
(b) einem Organometallverbindungskatalysator, und gegebenenfalls
(c) einem Organosiliciumverbindungskatalysator,
umfasst.

## Revendications

1. Résine de polybutène qui présente les caractères suivants :
(1) elle comprend 80 à 100 % en moles de motifs de butène-1 et 0 à 20 % en moles de motifs d'une α-oléfine en C₂ à C₁₀ (à l'exception du butène-1),
(2) elle a un indice de fluidité à l'état fondu (IFF) de 0,01 à 10 g/10 min.,
(3) elle a une distribution des masses moléculaires qui est représentée par un rapport Mp/Mn de la masse moléculaire moyenne en poids Mp à la masse moléculaire moyenne en nombre Mn supérieur ou égal à 6, et
(4) sur la courbe de distribution des masses moléculaires, tracée sur la base du chromatogramme fourni par la chromatographie de perméation sur gel (CPG), la partie correspondant aux masses moléculaires moyennes en poids supérieures ou égales à 6 x 10⁵ représente 20 % ou plus de l'aire totale qui est définie comme étant l'aire entourée par la courbe et l'axe horizontal.

2. Résine de polybutène selon la revendication 1, qui comprend un mélange de 5 à 95 % en poids d'un résine de polybutène (A) ayant les caractères suivants :
(1) elle contient 80 à 100 % en moles de motifs de butène-1 et 0 à 20 % en moles de motifs d'une α-oléfine en C₂ à C₁₀ (à l'exception du butène-1),
(2) elle a un IFF de 0,1 à 1000 g/10 minutes,
(3) elle a un Mp/Mn inférieur ou égal à 30, et
(4) sur la courbe de distribution des masses moléculaires, tracée sur la base du chromatogramme fourni par la chromatographie de perméation sur gel (CPG), la partie correspondant aux masses moléculaires moyennes en poids supérieures ou égales à 6 x 10⁵ représente moins de 20 % de l'aire totale qui est définie comme étant l'aire entourée par la courbe et l'axe horizontal,
et 5 à 95 % en poids d'un résine de polybutène (B) ayant les caractères suivants :
1) elle contient 80 à 100 % en moles de motifs de butène-1 et 0 à 20 % en moles de motifs d'une α-oléfine en C₂ à C₁₀ (à l'exception du butène-1),
2) elle a un IFF de 0,001 à 5 g/10 minutes,
3) elle a un Mp/Mn inférieur ou égal à 30, et
4) sur la courbe de distribution des masses moléculaires, tracée sur la base du chromatogramme fourni par la chromatographie de perméation sur gel (CPG), la partie correspondant aux masses moléculaires moyennes en poids supérieures ou égales à 6 x 10⁵ représente 20 % ou plus de l'aire totale qui est définie comme étant l'aire entourée par la courbe et l'axe horizontal.

3. Résine de polybutène selon la revendication 1 ou 2, dont l'indice d'isotacticité, déterminé par RMN, est supérieur ou égal à 90 (pourcent de mmmm).

4. Utilisation d'une résine de polybutène selon l'une quelconque des revendications 1 à 3 dans un matériau pour tuyau.

5. Utilisation d'un résine de polybutène selon l'une quelconque des revendications 1 à 3 dans un matériau pour tuyau d'eau froide et d'eau chaude.

6. Matériau pour tuyau en résine de polybutène, qui comprend une résine de polybutène selon l'une quelconque des revendications 1 à 3.

7. Tuyau en résine de polybutène qui comprend un matériau pour tuyau selon la revendication 6.

8. Raccord pour tuyau en résine de polybutène, qui comprend une résine de polybutène selon l'une quelconque des revendications 1 à 3.

9. Procédé de production d'un matériau pour tuyau en résine de polybutène selon l'une quelconque des revendications 1 à 3, qui comprend la copolymérisation de butène-1 et d'une α-oléfine en C₂ à C₁₀, autre que le butène-1, en présence de :
(a) un constituant solide de catalyseur, qui comprend un métal du groupe IVB, du magnésium et éventuellement un halogène,
(b) un constituant de catalyseur qui est un composé organométallique, et éventuellement
(c) un constituant de catalyseur qui est un composé organosilicié.
